# EUROPEAN PATENT APPLICATION

(11) **EP 4 773 465 A1**
(43) Date of publication of application: **08.07.2026**
(21) Application number: 25226141.7
(22) Date of filing: 22.12.2025
(51) Int. Cl.: H02J 7/02, H02J 7/60, H02M 1/32

(54) **POWER DISTRIBUTION UNIT AND CHARGING DEVICE**

(30) Priority: 03.01.2025 CN 202510014329
(71) Applicant: Huawei Technologies Co., Ltd., Shenzhen, Guangdong 518129 (CN)
(72) Inventor: CAI, Yi, Shenzhen 518129 (CN); LV, Zejie, Shenzhen 518129 (CN); CHEN, Jiale, Shenzhen 518129 (CN); PAN, Denghai, Shenzhen 518129 (CN); WANG, Qiao, Shenzhen 518129 (CN)
(74) Representative: Isarpatent

(57) **Abstract**

This application provides a power distribution unit and a charging device, and belongs to the field of power electronics technologies. A drive circuit of a direct current switch in the power distribution unit includes a first drive switch and a second drive switch, and the first drive switch and the second drive switch are connected in series to a coil in the direct current switch. Based on this, even if a short-circuit failure occurs on either of the first drive switch and the second drive switch, a controller in the drive circuit can still control the other drive switch to be turned off, so that the direct current switch is turned off. Therefore, a safety hazard caused by conduction of the direct current switch is effectively avoided, and reliability of the power distribution unit is improved.

## Description

### TECHNICAL FIELD

This application relates to the field of power electronics technologies, and in particular, to a power distribution unit and a charging device.

### BACKGROUND

A charging device is a large power supply cluster, and mainly includes a power conversion module, a power distribution unit (power distribution unit, PDU), and a charging connector. The power conversion module is configured to convert an alternating current (alternating current, AC) into a direct current (direct current, DC), and the PDU is configured to implement switching of the power conversion module and distribution of charging power, to distribute the direct current to the charging connector.

The PDU usually includes a plurality of direct current switches, and the plurality of direct current switches are specific execution units for the PDU to perform switching of the module and distribution of the power. The PDU further includes a drive circuit of the direct current switch, and the drive circuit is configured to control on/off of the direct current switch. The drive circuit usually includes a controller and a switching transistor. The switching transistor and a coil in the direct current switch are connected in series between a power supply end and a grounding end. When the controller controls the switching transistor to be turned on, the coil in the direct current switch is powered on, and the direct current switch is turned on. When the controller controls the switching transistor to be turned off, the coil in the direct current switch is powered off, and the direct current switch is turned off.

However, a short-circuit failure of the switching transistor in the drive circuit may result in conduction of the direct current switch, resulting in a safety hazard. Consequently, reliability of the PDU is low.

### SUMMARY

This application provides a power distribution unit and a charging device, to resolve a technical problem of low reliability of the power distribution unit.

According to a first aspect, a power distribution unit is provided. The power distribution unit includes a direct current switch and a drive circuit. The direct current switch includes a switch unit and a coil. A first end of the switch unit is configured to connect to a power conversion module, and a second end of the switch unit is configured to connect to a charging connector. The coil is configured to: when the coil is powered on, drive a circuit between the first end and the second end of the switch unit to be connected, or when the coil is powered off, drive the circuit between the first end and the second end of the switch unit to be disconnected. The drive circuit includes a first drive switch, a second drive switch, and a controller. The first drive switch, the second drive switch, and the coil are connected in series between a power supply end and a grounding end, and the controller is configured to control on/off of the first drive switch and control on/off of the second drive switch.

In the solution provided in this application, even if a short-circuit failure occurs on either of the first drive switch and the second drive switch, the controller in the drive circuit can still control the other drive switch to be turned off, so that the direct current switch is turned off. Therefore, a safety hazard caused by conduction of the direct current switch is effectively avoided, and reliability of the power distribution unit is improved.

In an embodiment, the controller has a first port and a second port. In addition, the controller is configured to output a first switch control signal to the first drive switch through the first port, to control on/off of the first drive switch, and is configured to output a second switch control signal to the second drive switch through the second port, to control on/off of the second drive switch.

The controller separately outputs the switch control signals to the two drive switches through the two different ports, so that the two drive switches can be independently controlled. Therefore, on one hand, flexibility of controlling the two drive switches is improved, and on the other hand, it can be avoided that both the two drive switches perform a misoperation because a single port is abnormal, thereby effectively reducing a probability that the direct current switch performs a misoperation.

In an embodiment, the controller is further configured to: when one of the first drive switch and the second drive switch is turned on, the other switch is turned off, and the circuit between the first end and the second end of the switch unit is connected, control the switch to be turned off.

It may be understood that, when the controller controls one of the first drive switch and the second drive switch to be turned on and the other switch to be turned off, and the controller detects that the circuit between the first end and the second end of the switch unit is connected, it may be determined that the controller fails to effectively control the other switch to be turned off. Correspondingly, the controller may determine that a short-circuit failure occurs on the other switch. To avoid a safety hazard caused by the switch on which the short-circuit failure occurs, the controller may control one of the switches to be turned off. For example, the controller may control both the first drive switch and the second drive switch to be turned off, that is, the controller may block a drive link of the direct current switch through software, to ensure that the power distribution unit enters a safe state.

In an embodiment, the direct current switch further includes an auxiliary contact, and the auxiliary contact includes two contacts. One contact is connected to the power supply end, and the other contact is connected to the controller. For example, the other contact may be connected to the controller through a voltage detection circuit or a level conversion circuit. The controller may detect a level status of the contact connected to the controller, to determine a connection/disconnection state of the circuit between the first end and the second end of the switch unit. The auxiliary contact is linked with the switch unit, and an on/off state of the auxiliary contact and an on/off state of the switch unit are in reverse logic, that is, the on/off states are opposite. In other words, when the switch unit is turned off, a circuit between the two contacts in the auxiliary contact is connected, and when the switch unit is turned on, the circuit between the two contacts in the auxiliary contact is disconnected.

In an embodiment, both the first port and the second port of the controller are input/output (input output, IO) ports. In addition, the controller has a plurality of I/O port groups, and each I/O port group includes at least one I/O port. The first port and the second port belong to different I/O port groups. The I/O port group is also referred to as an I/O port area or an I/O area.

Because a probability that I/O ports in different I/O port groups are simultaneously abnormal is low, a probability that the two drive switches simultaneously perform a misoperation can be effectively reduced by respectively providing the switch control signals by the I/O ports in the different I/O port groups for the two drive switches. Therefore, the probability that the direct current switch performs a misoperation is effectively reduced, and the reliability of the power distribution unit is improved.

In an embodiment, the controller is configured to: when a turn-off instruction delivered by a main controller in a charging device is received, and a current flowing through the switch unit is less than a current threshold, control both the first drive switch and the second drive switch to be turned off.

On the contrary, when the controller receives the turn-off instruction delivered by the main controller, and the current flowing through the switch unit is not less than the current threshold, the controller does not execute the turn-off instruction. The current threshold may be determined based on a current breaking capability of the switch unit. For example, the current threshold may be less than or equal to an upper limit of a current that can be broken by the switch unit. The controller executes the turn-off instruction delivered by the main controller only when determining that the current flowing through the switch unit is less than the current threshold. Therefore, it can be effectively avoided that the direct current switch performs a misoperation when the main controller delivers an incorrect instruction due to communication abnormality or a fault. For example, it can be effectively avoided that the direct current switch is turned off with load.

In an embodiment, the controller is configured to: when a turn-on instruction delivered by the main controller is received, and when a difference between a voltage at the first end of the switch unit and a voltage at the second end of the switch unit is less than a voltage threshold, control both the first drive switch and the second drive switch to be turned on.

On the contrary, when the controller receives the turn-on instruction delivered by the main controller, and the difference between the voltage at the first end and the voltage at the second end of the switch unit is not less than the voltage threshold, the controller does not execute the turn-on instruction. It may be understood that the voltage threshold may be determined based on a voltage breaking capability of the switch unit. The controller executes the turn-on instruction delivered by the main controller only when determining that the difference between the voltages at the two ends of the switch unit is less than the voltage threshold. Therefore, it can be effectively avoided that the direct current switch performs the misoperation when the main controller delivers the incorrect instruction due to the communication abnormality or the fault.

It can be learned from the foregoing analysis that, in the solution provided in this application, the controller may check, based on the voltage and the current of the switch unit, the action instruction delivered by the main controller. In this way, dependence of the power distribution unit on the action instruction delivered by the main controller can be effectively reduced, and it can be ensured that the direct current switch does not perform the misoperation when communication of the main controller is abnormal or the main controller is faulty.

In an embodiment, the drive circuit further includes a latch circuit. The controller is connected to the first drive switch and the second drive switch through the latch circuit. The latch circuit is configured to latch levels of the switch control signals output by the controller to the first drive switch and the second drive switch.

That the latch circuit latches the level of the switch control signal may mean that the latch circuit remains the level of the switch control signal unchanged until the controller adjusts the level of the switch control signal output by the controller. Because the latch circuit can latch the level of the switch control signal, in a scenario in which the controller is abnormally reset, on/off states of the first drive switch and the second drive switch can remain unchanged, so that an on/off state of the direct current switch remains unchanged. In this way, a misoperation of the direct current switch can be effectively avoided, and stability of the power distribution unit during operation can be ensured.

In an embodiment, the controller is further configured to send a heartbeat signal to the power conversion module, so that when detecting that the heartbeat signal is abnormal, the power conversion module stops outputting a direct current to the direct current switch. In other words, when detecting that the heartbeat of the controller in the power distribution unit is abnormal, the power conversion module can be directly shut down. Therefore, safety of the charging device can be effectively ensured when the controller in the power distribution unit is abnormal.

According to a second aspect, another power distribution unit is provided. The power distribution unit includes a direct current switch and a drive circuit. The direct current switch includes a switch unit and a coil. A first end of the switch unit is configured to connect to a power conversion module, and a second end of the switch unit is configured to connect to a charging connector. The coil is configured to: when the coil is powered on, drive a circuit between the first end and the second end of the switch unit to be connected, or when the coil is powered off, drive the circuit between the first end and the second end of the switch unit to be disconnected. The drive circuit includes a drive switch and a controller, and the drive switch and the coil are connected in series between a power supply end and a grounding end. The controller is configured to: when a turn-on instruction delivered by a main controller in a charging device is received, control the drive switch to be turned on; and when a turn-off instruction delivered by the main controller is received, and a current flowing through the switch unit is less than a current threshold, control the drive switch to be turned off.

It may be understood that, when the controller receives the turn-off instruction delivered by the main controller, and the current flowing through the switch unit is not less than the current threshold, the controller does not execute the turn-off instruction. The current threshold may be determined based on a current breaking capability of the switch unit. For example, the current threshold may be less than or equal to an upper limit of a current that can be broken by the switch unit. The controller executes the turn-off instruction delivered by the main controller only when determining that the current flowing through the switch unit is less than the current threshold. Therefore, it can be effectively avoided that the direct current switch performs a misoperation when the main controller delivers an incorrect instruction due to communication abnormality or a fault. For example, it can be effectively avoided that the direct current switch is turned off with load.

In an embodiment, the controller is configured to: when the turn-on instruction delivered by the main controller is received, and when a difference between a voltage at the first end of the switch unit and a voltage at the second end of the switch unit is less than a voltage threshold, control the drive switch to be turned on.

According to a third aspect, a charging device is provided. The charging device includes a power conversion module, one or more charging connectors, and the power distribution unit according to the first aspect or the second aspect. The power conversion module is configured to output a direct current to the power distribution unit, and the power distribution unit is configured to output the direct current to at least one of the one or more charging connectors.

In an embodiment, the power conversion module is further configured to: receive a heartbeat signal sent by a controller in the power distribution unit, and stop outputting the direct current to the power distribution unit when detecting that the heartbeat signal is abnormal.

In an embodiment, the charging device further includes a main controller, and the main controller is configured to send a turn-on instruction or a turn-off instruction to the controller in the power distribution unit. The turn-on instruction instructs a direct current switch in the power distribution unit to be turned on, and the turn-off instruction instructs the direct current switch to be turned off.

In conclusion, this application provides a power distribution unit and a charging device. A drive circuit of a direct current switch in the power distribution unit includes a first drive switch and a second drive switch, and the first drive switch and the second drive switch are connected in series to a coil in the direct current switch. Based on this, even if a short-circuit failure occurs on either of the first drive switch and the second drive switch, a controller in the drive circuit can still control the other drive switch to be turned off, so that the direct current switch is turned off. Therefore, a safety hazard caused by conduction of the direct current switch is effectively avoided, and reliability of the power distribution unit is improved.

### BRIEF DESCRIPTION OF DRAWINGS

FIG. 1 is a diagram of a structure of a charging device according to an embodiment of this application;
FIG. 2 is a diagram of a structure of another charging device according to an embodiment of this application;
FIG. 3 is a diagram of a structure of still another charging device according to an embodiment of this application;
FIG. 4 is a diagram of a structure of yet another charging device according to an embodiment of this application;
FIG. 5 is a diagram of a structure of a power distribution unit according to an embodiment of this application;
FIG. 6 is a diagram of a structure of another power distribution unit according to an embodiment of this application;
FIG. 7 is a diagram of a structure of still another power distribution unit according to an embodiment of this application;
FIG. 8 is a diagram of a structure of yet another power distribution unit according to an embodiment of this application;
FIG. 9 is a diagram of a structure of a latch unit according to an embodiment of this application;
FIG. 10 is a diagram of a structure of still yet another power distribution unit according to an embodiment of this application;
FIG. 11 is a diagram of a structure of a further power distribution unit according to an embodiment of this application; and
FIG. 12 is a diagram of a structure of a still further power distribution unit according to an embodiment of this application.

### DESCRIPTION OF EMBODIMENTS

The following describes in detail a power distribution unit and a charging device provided in embodiments of this application with reference to accompanying drawings.

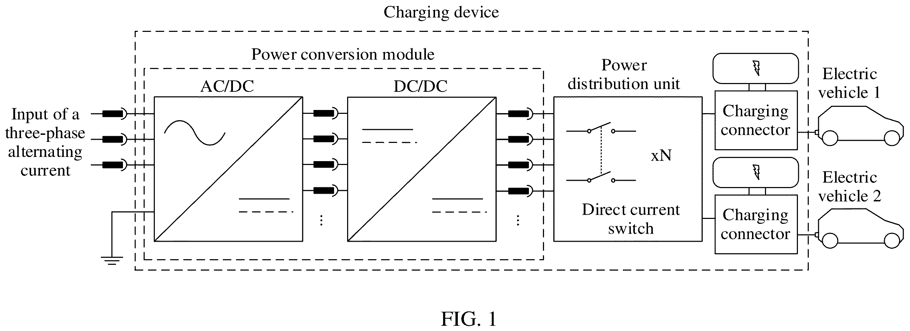

FIG. 1 is a diagram of a structure of a charging device according to an embodiment of this application. As shown in FIG. 1, the charging device may include a power conversion module, a power distribution unit (PDU), and one or more charging connectors. The power conversion module and the power distribution unit cooperate with each other to complete a charging task. The power conversion module is configured to: convert an alternating current (for example, a three-phase alternating current) of a grid into a direct current, and output the direct current to the power distribution unit. The power distribution unit is configured to connect to the one or more charging connectors, and is configured to charge an electric vehicle (EV for short) through at least one of the one or more charging connectors. Alternatively, the electric vehicle may reversely output electric energy to the grid through the charging device. The power distribution unit has functions such as switching on/off of the power conversion module, distribution of charging power, and isolation of connectors. The power distribution unit can implement efficient utilization of the power conversion module, and meet diversified charging requirements of incoming vehicles.

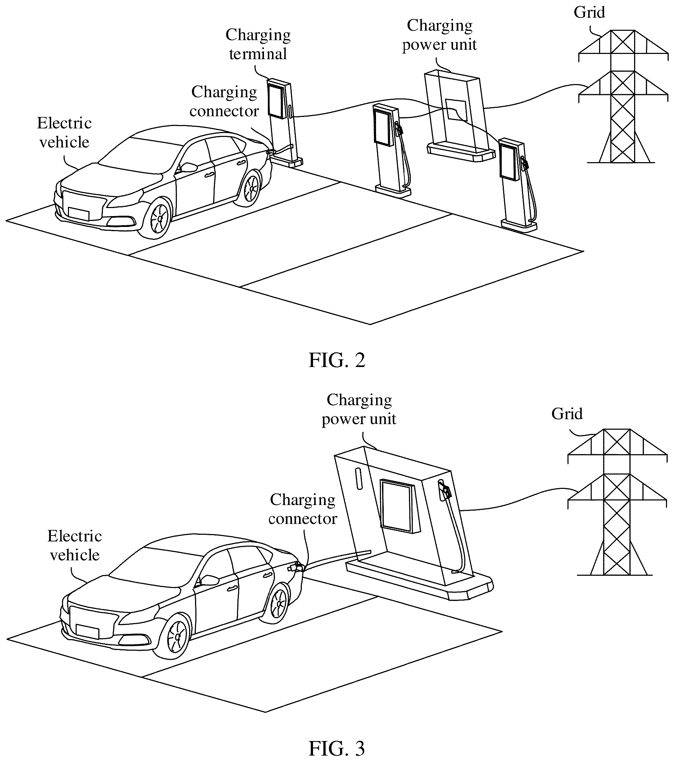

In some embodiments, as shown in FIG. 2, the charging device is a split charging pile. In addition, the charging device may include a charging power unit, at least one charging terminal, and at least one charging connector. The at least one charging terminal is separately connected to the charging power unit and the at least one charging connector, and each charging connector is configured to connect to an electric vehicle. For example, one charging terminal is connected to one or more charging connectors, and the one or more charging connectors are connected to one electric vehicle.

The charging power unit includes a power conversion module and a power distribution unit. The power conversion module is configured to: convert an alternating current output by a grid into a stable direct current, and then transmit the stable direct current to the power distribution unit. The power distribution unit is connected to the at least one charging connector through the at least one charging terminal. The power distribution unit is configured to: perform power distribution on the direct current output by the power conversion module, and transmit distributed charging power to the electric vehicle through the charging terminal and the charging connector.

The charging terminal usually includes a housing, a human-machine interaction interface, a charging control unit, a metering and billing unit, and the like, and is configured to: perform information exchange, energy transmission, metering and billing, and the like with the electric vehicle. The electric vehicle is a means of transportation driven by electric energy. For example, the electric vehicle may be a pure electric vehicle (pure electric vehicle/battery electric vehicle, pure EV/battery EV), a hybrid electric vehicle (hybrid electric vehicle, HEV), a range extended electric vehicle (range extended electric vehicle, REEV), or a plug-in hybrid electric vehicle (plug-in hybrid electric vehicle, PHEV).

In some other embodiments, as shown in FIG. 3, the charging device is an integrated charging pile. In addition, a human-machine interaction interface, a charging control unit, a metering and billing unit, and the like in the charging device are all directly disposed in a charging power unit. Correspondingly, the charging device includes only the charging power unit and at least one charging connector connected to the charging power unit, and does not include a charging terminal. A power distribution unit in the charging power unit can directly transmit distributed charging power to an electric vehicle through the charging connector.

Still refer to FIG. 1. The power conversion module may include an AC/DC converter and a DC/DC converter. The AC/DC converter is configured to convert an alternating current into a direct current, and the DC/DC converter is configured to convert a voltage of the direct current and output a converted voltage to the power distribution unit. The power distribution unit mainly includes a direct current switch (also referred to as a high-voltage direct current switch) and a drive circuit of the direct current switch. The direct current switch is a specific execution unit for the power distribution unit to perform switching of the module and distribution of power. For example, the direct current switch may be usually a power distribution switch like a contactor or a relay. When a short circuit or a misoperation occurs on the direct current switch, a short circuit may occur between batteries of different electric vehicles that are being charged, causing a serious safety accident like fire or even an explosion. Therefore, a proper functional safety design of the drive circuit and drive logic of the direct current switch is a key to ensuring long-term reliable operation of the charging device.

It may be understood that the power distribution unit usually includes one or more direct current switches. The power conversion module may usually include at least one AC/DC converter and a plurality of DC/DC converters. In addition, the charging device includes one or more charging connectors. For example, it is assumed that the power conversion module includes m DC/DC converters, and the charging device includes k charging connectors. In this case, a quantity N of direct current switches included in the power distribution unit may satisfy: N = m × k, where N, m, and k are all positive integers. Certainly, the quantity N of direct current switches may alternatively be less than m × k. This is not limited in embodiments of this application.

It may be further understood that the N direct current switches included in the power distribution unit may be arranged in a matrix. Correspondingly, the power distribution unit may also be referred to as a power sharing matrix.

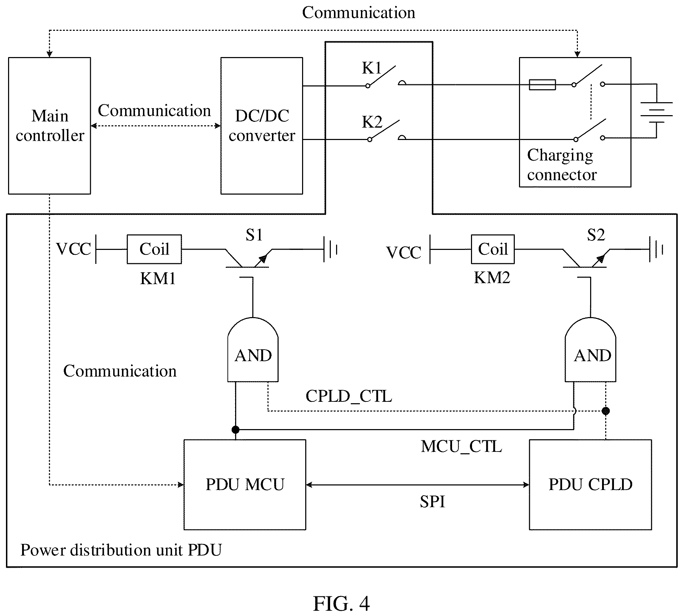

FIG. 4 is a diagram of a structure of another charging device according to an embodiment of this application. As shown in FIG. 4, the charging device usually further includes a main controller (namely, a main control). The main controller separately establishes communication connections to a DC/DC converter, a power distribution unit, and a charging connector. The main controller can query for, based on the foregoing communication connections, a status of the DC/DC converter, a status of a direct current switch in the power distribution unit, and a status of the charging connector, generate a corresponding action instruction based on the queried statuses, and deliver the corresponding action instruction to a drive circuit in the power distribution unit. The drive circuit in the power distribution unit may further control, based on the action instruction, on/off of the direct current switch.

In some embodiments, the power distribution unit uses a contactor or a relay as the direct current switch. For example, refer to FIG. 4. The direct current switch includes a contactor 1 and a contactor 2. The contactor 1 includes a switch unit K1 and a coil KM1, and the contactor 2 includes a switch unit K2 and a coil KM2. The drive circuit of the direct current switch includes a microcontroller unit (microcontroller unit, MCU), a complex programmable logic device (complex programmable logic device, CPLD), a switching transistor S1, and a switching transistor S2. The switching transistor S1 is connected in series to the coil KM1 in the contactor 1, and the switching transistor S2 is connected in series to the coil KM2 in the contactor 2. In addition, the MCU and the CPLD in the drive circuit can jointly control on/off of the switching transistors S1 and S2 according to an action instruction delivered by the main controller. When the switching transistors S1 and S2 are controlled to be turned on, the coils KM1 and KM2 are powered on, and the switch units K1 and K2 are turned on, so that the contactor 1 and the contactor 2 are turned on. When the switching transistors S1 and S2 are controlled to be turned off, the coils KM1 and KM2 are powered off, and the switch units K1 and K2 are turned off under action of a reset spring, so that the contactors are turned off.

However, in this solution, control of the switching transistors S1 and S2 is jointly completed by the MCU and the CPLD, and the MCU and the CPLD need to communicate with each other in real time to transmit respective control information. Therefore, control of the switching transistor depends on quality of communication between the MCU and the CPLD. Once the communication is abnormal, the MCU and the CPLD cannot cooperate to control the direct current switch. In addition, the drive circuit uses a single-transistor structure, that is, uses one switching transistor to drive the coil, and reliability of the drive circuit is low. Once the switching transistor is short-circuited, the contactor is conducted, and results in a safety accident.

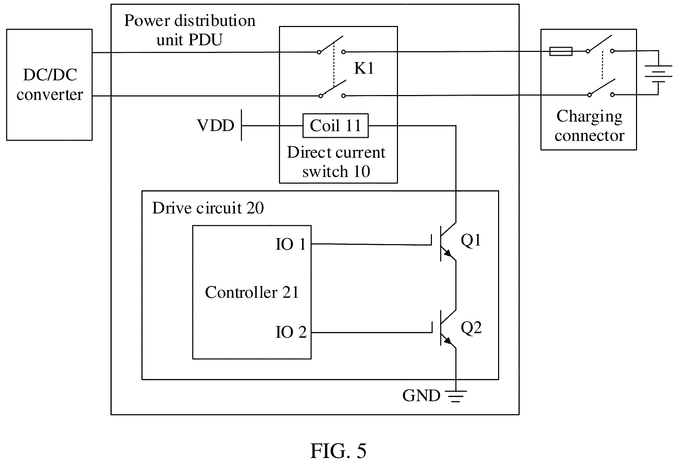

An embodiment of this application provides a power distribution unit. The power distribution unit can be used in the application scenario shown in FIG. 1, and the power distribution unit has high reliability and can implement long-term stable operation. As shown in FIG. 5, the power distribution unit provided in this embodiment of this application includes a direct current switch 10 and a drive circuit 20 of the direct current switch 10.

The direct current switch 10 includes a switch unit K1 and a coil 11. A first end of the switch unit K1 is configured to connect to a power conversion module, for example, configured to connect to a DC/DC converter in the power conversion module. A second end of the switch unit K1 is configured to connect to a charging connector. The coil 11 is configured to: when the coil 11 is powered on, drive a circuit between the first end and the second end of the switch unit K1 to be connected, or when the coil 11 is powered off, drive the circuit between the first end and the second end of the switch unit K1 to be disconnected.

In this embodiment of this application, the direct current switch 10 may be a relay or a contactor. The switch unit K1 may include a stationary contact, a movable contact, an armature, and a reset element (for example, a spring). The armature is connected to the movable contact. After the coil 11 is powered on, a magnetic field generated by the coil 11 generates attraction force on the armature, and the armature moves under action of the attraction force and attracts the movable contact to the stationary contact, so that the circuit between the first end and the second end of the switch unit K1 is connected. After the coil 11 is powered off, the attraction force of the coil 11 to the armature disappears, the armature is reset to an initial position under action of the reset element, and the movable contact and the stationary contact are disconnected, so that the circuit between the first end and the second end of the switch unit K1 is disconnected.

It may be understood that one of the stationary contact and the movable contact of the switch unit K1 may be the first end of the switch unit K1, and the other contact is the second end of the switch unit K1. Alternatively, the switch unit K1 may include two stationary contacts that are spaced (that is, the two stationary contacts are not in direct contact), and the two stationary contacts are respectively the first end and the second end of the switch unit K1. In addition, the armature can drive the movable contact to be attracted to or disconnected from the two stationary contacts. When the movable contact is attracted to the two stationary contacts, the circuit between the first end and the second end of the switch unit K1 is connected.

Still refer to FIG. 5. The drive circuit 20 of the direct current switch 10 includes a first drive switch Q1, a second drive switch Q2, and a controller 21. The first drive switch Q1, the second drive switch Q2, and the coil 11 are connected in series between a power supply end VDD and a grounding end GND. The controller 21 is configured to control on/off of the first drive switch Q1 and control on/off of the second drive switch Q2. The controller 21 may be a control component like an MCU, a field programmable gate array (field programmable gate array, FPGA), or a CPLD.

It may be understood that, when the controller 21 controls both the first drive switch Q1 and the second drive switch Q2 to be turned on, a current path is formed between the power supply end VDD and the grounding end GND, and the coil 11 is powered on, so that the circuit between the first end and the second end of the switch unit K1 is connected. When the controller 21 controls at least one of the first drive switch Q1 and the second drive switch Q2 to be turned off, the current path between the power supply end VDD and the grounding end GND is disconnected, the coil 11 is powered off, and the circuit between the first end and the second end of the switch unit K1 is disconnected.

It may be further understood that, that the circuit between the first end and the second end of the switch unit K1 is connected means that the direct current switch 10 is turned on (also referred to as closed); and that the circuit between the first end and the second end of the switch unit K1 is disconnected means that the direct current switch 10 is turned off.

In conclusion, this embodiment of this application provides a power distribution unit. A drive circuit of a direct current switch in the power distribution unit includes a first drive switch and a second drive switch, and the two drive switches are connected in series to a coil in the direct current switch. Based on this, even if a short-circuit failure occurs on either of the first drive switch and the second drive switch, a controller in the drive circuit can still control the other drive switch to be turned off, so that the direct current switch is turned off. Therefore, a safety hazard caused by conduction of the direct current switch is effectively avoided, and reliability of the power distribution unit is improved.

In addition, in the solution provided in this embodiment of this application, only one controller is required to control the drive switch. This can avoid an increase in a volume and costs of the power distribution unit, and can avoid a misoperation of the drive switch caused by abnormal communication between two controllers, that is, can effectively reduce dependence of control reliability of the drive switch on quality of communication between the two controllers.

The foregoing is described by using an example in which the drive circuit 20 includes two drive switches. It may be understood that a quantity of drive switches included in the drive circuit 20 may alternatively be greater than 2. For example, the quantity of drive switches may alternatively be 3 or 4. Alternatively, it may be understood that the drive circuit 20 in the power distribution unit may include n drive switches, and the n drive switches and the coil 11 are connected in series between the power supply end VDD and the grounding end GND, where n is an integer greater than 1.

In an embodiment, all the drive switches may be switching transistors. The switching transistor has a small volume and low costs, so that an increase in the volume and costs of the power distribution unit can be effectively avoided. For example, the switching transistor may be a controllable component like a triode, a metal-oxide-semiconductor field-effect transistor (metal-oxide-semiconductor field-effect transistor, MOSFET), or an insulated-gate bipolar transistor (insulated-gate bipolar transistor, IGBT). For example, in FIG. 5, an example in which both the first drive switch Q1 and the second drive switch Q2 are triodes is used for illustration. One end of the coil 11 is connected to the power supply end VDD, a collector (namely, a source) of the upper transistor Q1 is connected to the other end of the coil 11, an emitter (namely, a drain) of the upper transistor Q1 is connected to a collector of the lower transistor Q2, and an emitter of the lower transistor Q2 is grounded GND.

Certainly, the drive switch may alternatively be another controllable switch component other than the switching transistor. For example, the drive switch may alternatively be a relay, for example, an onboard relay with a small specification. A component type of the drive switch is not limited in this embodiment of this application, provided that it is ensured that the drive switch can switch an on/off state under control of the controller.

In an embodiment, still refer to FIG. 5. The controller 21 has a first port I/O 1 and a second port I/O 2. The controller 21 is configured to output a first switch control signal to the first drive switch Q1 through the first port I/O 1, to control on/off of the first drive switch Q1, and is configured to output a second switch control signal to the second drive switch Q2 through the second port I/O 2, to control on/off of the second drive switch Q2.

For example, it is assumed that both the first drive switch Q1 and the second drive switch Q2 are switching transistors. The first port I/O 1 may be connected to a base (namely, a gate) of the first drive switch Q1, and output the first switch control signal to the base of the first drive switch Q1. The second port I/O 2 may be connected to a base of the second drive switch Q2, and output the second switch control signal to the base of the second drive switch Q2.

The controller 21 separately outputs the switch control signals to the two drive switches through the two different ports, so that the two drive switches can be independently controlled. Therefore, on one hand, flexibility of controlling the two drive switches is improved, and on the other hand, it can be avoided that both the two drive switches perform a misoperation because a single port is abnormal, thereby effectively reducing a probability that the direct current switch 10 performs a misoperation.

It may be understood that the controller 21 may alternatively provide a same switch control signal for the two drive switches through one port, to control the two drive switches to be simultaneously turned on or turned off. Therefore, control logic of the controller 21 can be effectively simplified, and structural complexity of the drive circuit 20 can be reduced.

It may be further understood that a driving capability of the switch control signal output by the controller 21 is usually weak, and is insufficient to directly drive the drive switch. Therefore, the drive circuit 20 usually further includes a switch drive circuit (for example, a gate drive circuit), and the controller 21 may be connected to the drive switch through the switch drive circuit. The switch drive circuit can enhance the driving capability of the switch control signal output by the controller 21, to effectively control the on/off state of the drive switch.

In an embodiment, both the first port I/O 1 and the second port I/O 2 may be input/output (input/output, I/O) ports. In addition, the controller 21 may have a plurality of I/O port groups (groups), and each I/O port group includes at least one I/O port. The first port I/O 1 and the second port I/O 2 may belong to different I/O port groups. The I/O port group may also be referred to as an I/O port area or an I/O area.

Because a probability that I/O ports in different I/O port groups are simultaneously abnormal is low, a probability that the two drive switches simultaneously perform a misoperation can be effectively reduced by respectively providing the switch control signals by the I/O ports in the different I/O port groups for the two drive switches. Therefore, the probability that the direct current switch 10 performs a misoperation is effectively reduced, and the reliability of the power distribution unit is improved.

In an embodiment, the controller 21 is further configured to: when one of the first drive switch Q1 and the second drive switch Q2 is turned on, the other switch is turned off, and the circuit between the first end and the second end of the switch unit K1 is connected, control the switch to be turned off.

It may be understood that the controller 21 may be configured to detect a status of each drive switch, that is, perform status self-check on each drive switch. A process of performing status self-check on the second drive switch Q2 includes: First, the first drive switch Q1 is controlled to be turned on by using the first switch control signal, and the second drive switch Q2 is controlled to be turned off by using the second switch control signal. Then, a connection/disconnection state of the first end and the second end of the switch unit K1 is detected. When detecting that the circuit between the first end and the second end of the switch unit K1 is connected, the controller 21 may determine that the second switch control signal sent by the controller 21 fails to effectively control the second drive switch Q2 to be turned off. Further, the controller 21 may determine that a short-circuit failure occurs on the second drive switch Q2. To avoid a safety hazard caused by the second drive switch Q2 on which the short-circuit failure occurs, the controller 21 may control, by using the first switch control signal, the first drive switch Q1 to be turned off. In other words, the controller 21 may block a drive link of the direct current switch 10 through software, to ensure that the power distribution unit enters a safe state.

It may be further understood that the controller 21 may further perform status self-check on the first drive switch Q1. A process of the status self-check includes: First, the first drive switch Q1 is controlled to be turned off by using the first switch control signal, and the second drive switch Q2 is controlled to be turned on by using the second switch control signal. Then, the connection/disconnection state of the first end and the second end of the switch unit K1 is detected. When detecting that the circuit between the first end and the second end of the switch unit K1 is connected, the controller 21 may determine that a short-circuit failure occurs on the first drive switch Q1. In addition, the controller 21 may control, by using the second switch control signal, the second drive switch Q2 to be turned off, to ensure that the power distribution unit enters the safe state.

It may be further understood that, in a scenario in which the drive circuit includes three or more drive switches, the controller 21 may also sequentially perform status self-check on each drive switch by using a similar method. When performing status self-check on a target drive switch, the controller 21 may control the target drive switch to be turned off, and control other drive switches to be all turned on. Then, when detecting that the circuit between the first end and the second end of the switch unit K1 is connected, the controller 21 may determine that a short-circuit failure occurs on the target drive switch, and may control the drive switches to be all turned off. When detecting that the circuit between the first end and the second end of the switch unit K1 is not connected, the controller 21 may determine that a short-circuit failure does not occur on the target drive switch, and may operate normally. It can be learned from the foregoing analysis that the controller 21 may detect statuses of the drive switches by turning off the drive switches in a time division manner.

For example, it is assumed that the drive switches in the drive circuit 20 are all NPN-type transistors, a switch control signal that is output by the controller 21 and that is used to control the drive switch to be turned on may be a high-level signal, and a switch control signal that is output by the controller 21 and that is used to control the drive switch to be turned off may be a low-level signal. Correspondingly, when detecting that a short-circuit failure occurs on any drive switch, the controller 21 may pull down all switch control signals output by the controller 21 to the drive switches, that is, set all the switch control signals to a low level.

In an embodiment, after receiving a turn-on instruction delivered by a main controller, the controller 21 may first sequentially detect the status of each drive switch before executing the turn-on instruction. When it is detected that a short-circuit failure does not occur on each drive switch, the turn-on instruction is executed. Alternatively, the controller 21 may periodically detect the status of the drive switch in the drive circuit 20 in an idle state (that is, in a state in which the direct current switch 10 is turned off). For example, in the idle state, the controller 21 may sequentially detect the status of each drive switch once every 30 minutes or once an hour.

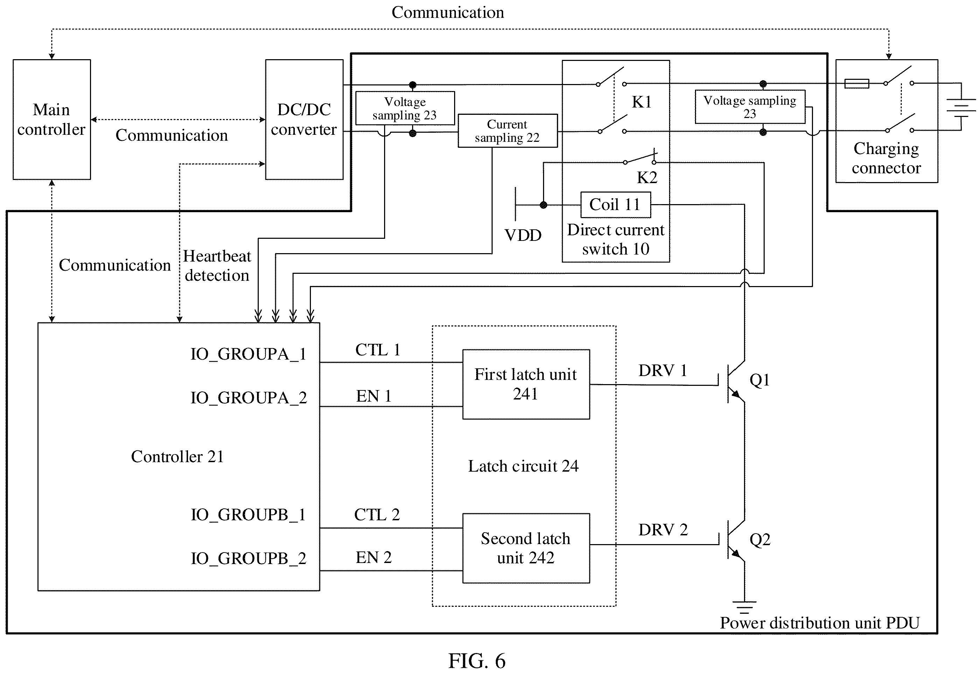

It may be further understood that the movable contact and the stationary contact in the switch unit K1 of the direct current switch 10 are also referred to as main contacts. In an embodiment, as shown in FIG. 6, the direct current switch 10 further includes an auxiliary contact K2. In this embodiment of this application, the main contacts in the direct current switch 10 are in a disconnected state by default (that is, the first end and the second end of the switch unit K1 are disconnected by default), and the auxiliary contact K2 is in an attracted state by default. In addition, when the main contacts in the direct current switch 10 are attracted (that is, the circuit between the first end and the second end of the switch unit K1 is connected), the auxiliary contact K2 is disconnected. Therefore, the controller 21 may be connected to the auxiliary contact K2, and may detect a status of the main contact by detecting a status of the auxiliary contact K2, that is, detect an on/off state of the switch unit K1.

For example, refer to FIG. 6. The auxiliary contact K2 may include two contacts. One contact is connected to the power supply end VDD, and the other contact is connected to a port of the controller 21. For example, the other contact may be connected to the port of the controller 21 through a voltage detection circuit or a level conversion circuit. The controller 21 may determine an on/off state of the auxiliary contact K2 based on a level of the port that is of the controller 21 and that is connected to the auxiliary contact K2, and further determine the on/off state of the switch unit K1. When detecting that the port that is of the controller 21 and that is connected to the auxiliary contact K2 is at a high level, the controller 21 may determine that the auxiliary contact K2 is in the attracted state, and further determine that the switch unit K1 is in a turn-off state. When detecting that the port that is of the controller 21 and that is connected to the auxiliary contact K2 is at a low level (for example, a voltage is 0), the controller 21 may determine that the auxiliary contact K2 is in the disconnected state, and further determine that the switch unit K1 is in a turn-on state.

Because a voltage of the power supply end VDD is low, for example, 12 V, a port of the controller 21 may be connected to the auxiliary contact K2 through the voltage detection circuit or the level conversion circuit with a simple structure, and the connection/disconnection state of the first end and the second end of the switch unit K1 is detected based on a level status of the port. The detection manner is simple.

It may be understood that, in addition to detecting the connection/disconnection state of the first end and the second end of the switch unit K1 through the auxiliary contact K2, the controller 21 may further perform detection in another manner. For example, the controller 21 may sample a voltage at the first end and a voltage at the second end of the switch unit K1 through a voltage sampling circuit. When a voltage difference between the two ends of the switch unit K1 is small (for example, the voltage difference is 0 and or is close to 0), the controller 21 may determine that the switch unit K1 is in the turn-on state. On the contrary, when the voltage difference between the two ends of the switch unit K1 is large, the controller 21 may determine that the switch unit K1 is in the turn-off state.

In an embodiment, the controller 21 is configured to: when a turn-off instruction delivered by the main controller in a charging device is received, and a current flowing through the switch unit K1 is less than a current threshold, execute the turn-off instruction. In other words, the controller 21 may control both the first drive switch Q1 and the second drive switch Q2 to be turned off, so that the circuit between the first end and the second end of the switch unit K1 is disconnected.

On the contrary, when the controller 21 receives the turn-off instruction delivered by the main controller, and the current flowing through the switch unit K1 is not less than the current threshold, the controller 21 does not execute the turn-off instruction. In other words, the controller 21 may enable both the first drive switch Q1 and the second drive switch Q2 to remain a turn-on state, so that the circuit between the first end and the second end of the switch unit K1 remains a connected state.

The current threshold may be determined based on a current breaking capability of the switch unit K1 in the direct current switch 10. For example, the current threshold may be less than or equal to an upper limit of a current that can be broken by the switch unit K1. It can be learned from the foregoing description that the controller 21 may check, based on the value of the current flowing through the switch unit K1, the turn-off instruction delivered by the main controller. Because the controller 21 determines, only when the turn-off instruction delivered by the main controller is received and the current flowing through the switch unit K1 is less than the current threshold, that a hardware turn-off condition of the direct current switch 10 is met, so that dependence of the power distribution unit on the turn-off instruction delivered by the main controller can be effectively reduced. In other words, the power distribution unit has a capability of determining on/off control of the direct current switch 10 by itself, and no longer completely depends on the instruction delivered by the main controller. Therefore, it can be ensured that the direct current switch 10 does not perform a misoperation when the main controller delivers an incorrect instruction due to communication abnormality or a fault. For example, it can be effectively avoided that the direct current switch 10 is turned off with load. In this way, safety of the power distribution unit can be effectively ensured, and long-term reliable operation of the power distribution unit can be implemented.

For example, as shown in FIG. 6, the drive circuit 20 may further include a current sampling circuit 22. In addition, the first end of the switch unit K1 is connected to the power conversion module through the current sampling circuit 22, for example, connected to the DC/DC converter in the power conversion module. Alternatively, the second end of the switch unit K1 is connected to the charging connector through the current sampling circuit 22. In other words, the current sampling circuit 22 and the switch unit K1 may be connected in series between the power conversion module and the charging connector. In addition, the current sampling circuit 22 may be configured to sample the current flowing through the switch unit K1, and the controller 21 may determine, based on an output of the current sampling circuit 22, the value of the current flowing through the switch unit K1.

In an embodiment, the controller 21 is configured to: when the turn-on instruction delivered by the main controller is received, and when the difference between the voltage at the first end and the voltage at the second end of the switch unit K1 is less than a voltage threshold, execute the turn-on instruction. In other words, the controller 21 may control both the first drive switch Q1 and the second drive switch Q2 to be turned on, so that the circuit between the first end and the second end of the switch unit K1 is connected.

On the contrary, when the controller 21 receives the turn-on instruction delivered by the main controller, and the difference between the voltage at the first end and the voltage at the second end of the switch unit K1 is not less than the voltage threshold, the controller 21 does not execute the turn-on instruction. In other words, the controller 21 may enable both the first drive switch Q1 and the second drive switch Q2 to remain a turn-off state, so that the first end and the second end of the switch unit K1 remain a disconnected state.

It may be understood that the difference between the voltage at the first end and the voltage at the second end of the switch unit K1 may be an absolute value of the difference. The voltage threshold may be determined based on a voltage breaking capability of the switch unit K1. For example, the voltage threshold may be less than or equal to an upper limit of a voltage that can be broken by the switch unit K1. It can be learned from the foregoing description that the controller 21 may check, based on the difference between the voltages at the two ends of the switch unit K1, the turn-on instruction delivered by the main controller. Because the controller 21 determines, only when the turn-on instruction delivered by the main controller is received and the difference between the voltages at the two ends of the switch unit K1 is less than the voltage threshold, that a hardware turn-on condition of the direct current switch 10 is met, so that dependence of the power distribution unit on the turn-on instruction delivered by the main controller can be effectively reduced. In other words, the power distribution unit has the capability of determining the on/off control of the direct current switch 10 by itself, and no longer completely depends on the instruction delivered by the main controller. Therefore, it can be ensured that the direct current switch 10 does not perform the misoperation when the main controller delivers the incorrect instruction due to the communication abnormality or the fault. In this way, the safety of the power distribution unit can be effectively ensured, and the long-term reliable operation of the power distribution unit can be implemented.

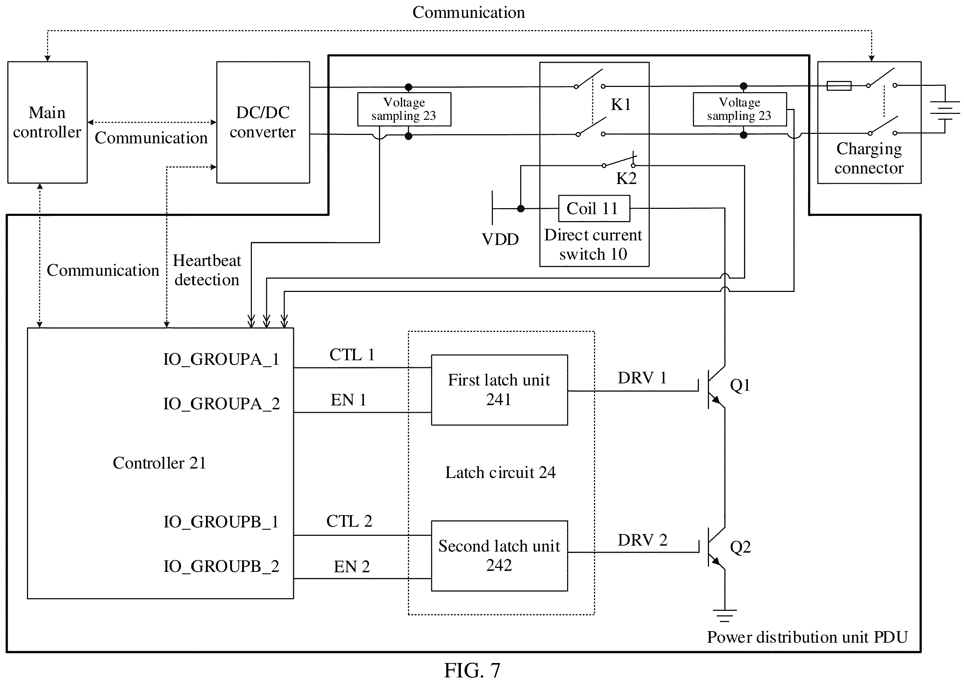

For example, as shown in FIG. 6 and FIG. 7, the drive circuit 20 may further include a voltage sampling circuit 23. The voltage sampling circuit 23 is separately connected to the first end and the second end of the switch unit K1. The voltage sampling circuit 23 is configured to sample the voltage at the first end and the voltage at the second end of the switch unit K1. The controller 21 may determine the voltage at the first end and the voltage at the second end of the switch unit K1 based on an output of the voltage sampling circuit 23.

In the solution provided in this embodiment of this application, the voltage sampling circuit and the current sampling circuit are integrated into the power distribution unit, and the power distribution unit can use sampled data of the power distribution unit as a hardware determining condition for an action of the direct current switch 10, and check the action instruction delivered by the main controller. Therefore, a specification requirement for the direct current switch 10 can be effectively reduced. The specification of the direct current switch 10 may be the voltage breaking capability and the current breaking capability of the direct current switch 10. In other words, based on the solution provided in this embodiment of this application, the direct current switch 10 in the power distribution unit may be a switch component with a low specification, for example, a relay (for example, an onboard relay) with a low specification. Because the low-specification direct current switch 10 has a small volume and low costs, the volume and the costs of the power distribution unit can be effectively reduced, thereby reducing a size and costs of the entire charging device.

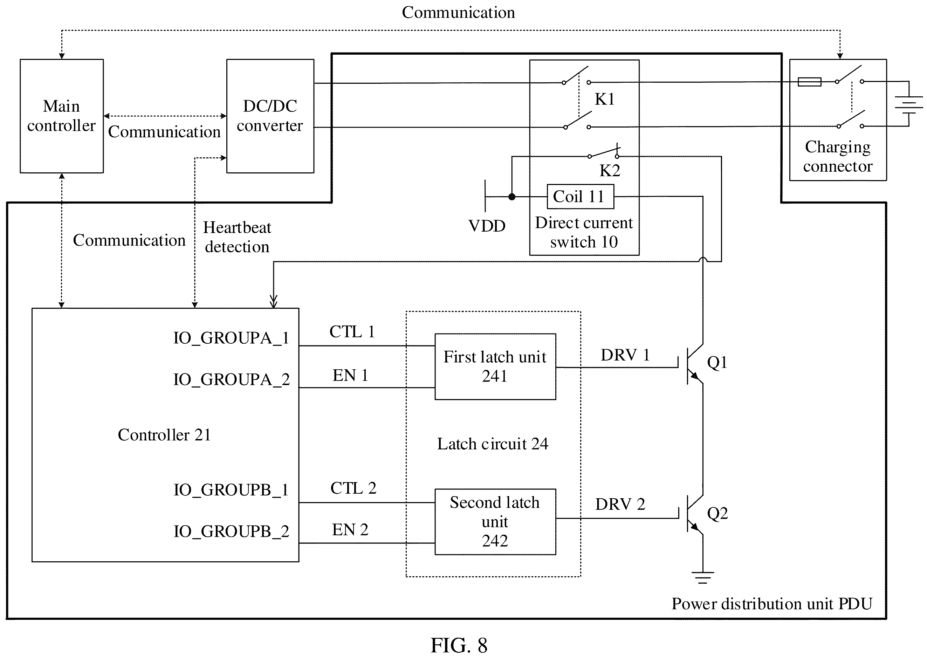

It may be further understood that, as shown in FIG. 8, the drive circuit 20 in the power distribution unit provided in this embodiment of this application may not need to include the current sampling circuit 22 and the voltage sampling circuit 23. For example, when the direct current switch 10 in the power distribution unit is a contactor with a high specification, the drive circuit 20 of the direct current switch 10 may not need the current sampling circuit 22 and the voltage sampling circuit 23. Correspondingly, after receiving the turn-on or turn-off instruction delivered by the main controller, the controller 21 may directly execute the instruction. The contactor with a high specification may be a contactor whose voltage breaking capability is higher than an operating voltage of the charging device and whose current breaking capability is higher than an operating current of the charging device. The operating voltage of the charging device may be a voltage output when the DC/DC converter in the power conversion module operates normally. The operating current of the charging device may be a current output when the DC/DC converter in the power conversion module operates normally.

Certainly, the drive circuit 20 in the power distribution unit provided in this embodiment of this application may include one of the current sampling circuit 22 and the voltage sampling circuit 23. For example, when the voltage breaking capability of the direct current switch 10 is lower than the operating voltage, and the current breaking capability is higher than the operating current, as shown in FIG. 7, the drive circuit 20 may include the voltage sampling circuit 23, and does not need to include the current sampling circuit 22. Alternatively, when the voltage breaking capability of the direct current switch 10 is higher than the operating voltage, and the current breaking capability is lower than the operating current, the drive circuit 20 may include the current sampling circuit 22, and does not need to include the voltage sampling circuit 23.

It may be further understood that the voltage sampling circuit 23 may include a voltage divider circuit and an amplification circuit. The voltage divider circuit is configured to perform voltage division on the voltage at the first end and the voltage at the second end of the direct current switch 10. The amplification circuit is configured to amplify a voltage output by the voltage divider circuit. The voltage divider circuit may be a resistive voltage divider circuit, and the amplification circuit may include an operational amplifier. The current sampling circuit 22 may include a current sensor or a current divider.

In an embodiment, as shown in FIG. 6 to FIG. 8, the drive circuit 20 further includes a latch circuit 24. In addition, the controller 21 is connected to the first drive switch Q1 and the second drive switch Q2 through the latch circuit 24. The latch circuit 24 is configured to latch levels of the switch control signals output by the controller 21 to the first drive switch Q1 and the second drive switch Q2.

That the latch circuit 24 latches the level of the switch control signal may mean that the latch circuit 24 remains the level of the switch control signal unchanged until the controller 21 adjusts the level of the switch control signal output by the controller 21. In other words, when the controller 21 does not actively adjust the level of the switch control signal, the level of the switch control signal received by the drive switch can remain unchanged under a latching action of the latch circuit 24. Therefore, in a scenario in which the controller 21 is abnormally reset, the on/off states of the first drive switch Q1 and the second drive switch Q2 can remain unchanged, so that the on/off state of the direct current switch 10 remains unchanged.

For example, as shown in FIG. 6 to FIG. 8, the latch circuit 24 may include a first latch unit 241 and a second latch unit 242. The first latch unit 241 is connected to the first drive switch Q1, and is configured to latch the level of the first switch control signal output by the controller 21 to the first drive switch Q1. The second latch unit 242 is connected to the second drive switch Q2, and is configured to latch the level of the second switch control signal output by the controller 21 to the second drive switch Q2.

It may be understood that a quantity of latch units included in the latch circuit 24 may be equal to a quantity of drive switches included in the drive circuit 20. Each latch unit corresponds to one drive switch, and is configured to latch a level of a switch control signal output by the controller 21 to the corresponding drive switch.

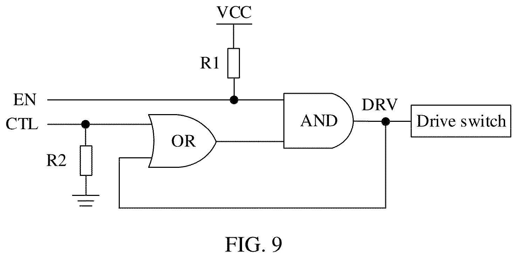

It may be further understood that structures of the plurality of latch units included in the latch circuit 24 may be the same. For example, refer to FIG. 9. Each latch unit may include an AND (AND) gate, an OR (OR) gate, a first resistor R1, and a second resistor R2. In addition, the switch control signals output by the controller 21 may include a control signal CTL and an enable signal EN. A first input end of the OR gate is configured to receive the control signal CTL, a second input end of the OR gate is connected to an output end of the AND gate, an output end of the OR gate is connected to a first input end of the AND gate, a second input end of the AND gate is configured to receive the enable signal EN, and the output end of the AND gate is connected to the drive switch (for example, connected to a gate of a switching transistor). In addition, the second input end of the AND gate is further connected to the power supply end VCC through the first resistor R1 (also referred to as a pull-up resistor), and the first input end of the OR gate is further grounded GND through the second resistor R2 (also referred to as a pull-down resistor).

Table 1 is a truth table of the latch unit shown in FIG. 9. It can be learned from Table 1 that, when the drive switch needs to be controlled to be turned on, the control signal CTL output by the controller 21 is at a high level 1, and the enable signal EN is also at a high level 1. In this case, a drive signal DRV output by the AND gate in the latch unit to the drive switch is at a high level 1, and the drive switch is turned on. When the drive switch needs to be controlled to be turned off, the control signal CTL output by the controller 21 is at a low level 0, and the enable signal EN is also at a low level 0. In this case, the drive signal DRV output by the AND gate in the latch unit to the drive switch is at a low level 0, and the drive switch is turned off. When the enable signal EN is at a low level 0 and the control signal CTL is at a high level 1, the drive signal DRV output by the AND gate in the latch unit to the drive switch is at a low level 0, and the drive switch is turned off. When the enable signal EN is at a high level 1 and the control signal CTL is at a low level 0, the drive signal DRV output by the AND gate in the latch unit to the drive switch is in a maintained state, that is, a level of the drive signal DRV can be maintained (that is, latched) as a level at a previous moment. For the level of the drive signal DRV in the maintained state, refer to Table 2.

**Table 1**

| EN | CTL | DRV |
|---|---|---|
| 0 | 0 | 0 |
| 0 | 1 | 0 |
| 1 | 0 | Maintained state |
| 1 | 1 | 1 |

Table 2 is a truth table of the latch unit when the controller 21 is abnormal. Refer to Table 2. When the controller 21 is abnormal, the levels of the control signal CTL and the enable signal EN that are output by the controller 21 are in an uncertain state. Therefore, the level of the enable signal EN received by the second input end of the AND gate can be maintained at a high level 1 under action of the first resistor R1, and the level of the control signal CTL received by the first input end of the OR gate can be maintained at a low level 0 under action of the second resistor R2. In this case, the drive signal DRV output by the AND gate in the latch unit to the drive switch is in a maintained state. Correspondingly, when the drive signal DRV output by the AND gate is at a low level 0 before the controller 21 is abnormally reset, it can be learned from Table 2 that, after the controller 21 is abnormally reset, the drive signal DRV output by the AND gate is still at a low level 0. When the drive signal DRV output by the AND gate is at a high level 1 before the controller 21 is abnormally reset, it can be learned from Table 2 that, after the controller 21 is abnormally reset, the drive signal DRV output by the AND gate is still at a high level 1. It can be learned from the foregoing analysis that, the latch unit is used, so that it can be ensured that the level of the drive signal DRV received by the drive switch remains unchanged before and after the controller 21 is abnormally reset, thereby ensuring that the on/off state of the drive switch remains unchanged, and effectively avoiding a misoperation of the drive switch caused by abnormal reset of the controller 21.

**Table 2**

| EN | CTL | DRV (before reset) | DRV (after reset) |
|---|---|---|---|
| 1 | 0 | 0 | 0 |
| 1 | 0 | 1 | 1 |

It can be further learned from FIG. 6 to FIG. 8 that, in a scenario in which the switch control signals output by the controller 21 include the control signal CTL and the enable signal EN, the first port I/O 1 may include two I/O ports I/O_GROUPA_1 and I/O_GROUPA_2, and the two I/O ports belong to an I/O group A (GROUPA). The second port I/O 2 may also include two I/O ports I/O_GROUPB_1 and I/O_GROUPB_2, and the two I/O ports belong to an I/O group B (GROUPB). Correspondingly, the first switch control signal output by the first port I/O 1 may include a first control signal CTL 1 output by the I/O port I/O_GROUPA_1 and a first enable signal EN 1 output by the I/O port I/O_GROUPA_2. The first latch unit 241 can output a first drive signal DRV 1 to the first drive switch Q1 based on the first control signal CTL 1 and the first enable signal EN 1. The second switch control signal output by the second port I/O 2 may include a second control signal CTL 2 output by the I/O port I/O_GROUPB_1 and a second enable signal EN 2 output by the I/O port I/O_GROUPB_2. The second latch unit 242 can output a second drive signal DRV 2 to the second drive switch Q2 based on the second control signal CTL 2 and the second enable signal EN 2.

It may be further understood that the latch unit shown in FIG. 9 is merely an example. The latch unit may alternatively be implemented by using a combination of other logic gates. Alternatively, the latch unit may be directly implemented by using a latch chip (namely, a latch). An implementation of the latch unit is not limited in this embodiment of this application, provided that the latch unit can latch the level status of the switch control signal loaded to the drive switch.

In an embodiment, as shown in FIG. 6 to FIG. 8, a communication connection may be directly established between the controller 21 and the power conversion module (for example, the DC/DC converter). The controller 21 is further configured to send a heartbeat signal to the power conversion module (for example, the DC/DC converter) through the communication connection, so that when detecting that the heartbeat signal is abnormal, the power conversion module stops outputting a direct current to the direct current switch 10. That the power conversion module stops outputting the direct current may be that the power conversion module stops outputting the direct current. Alternatively, it may be understood that the power conversion module can directly perform heartbeat detection on the controller 21, and when the heartbeat detection is abnormal, the power conversion module can be directly shut down, to ensure that the power conversion module enters a safe state.

For example, the communication connection between the controller 21 and the power conversion module (for example, the DC/DC converter) may be a controller area network (controller area network, CAN) bus connection, a serial peripheral interface (serial peripheral interface, SPI) connection, an inter-integrated circuit (inter-integrated circuit, IIC) bus connection, or the like. In addition to indirect communication between the power distribution unit and the power conversion module through the main controller, direct heartbeat detection is further added between the power distribution unit and the power conversion module. Therefore, safety of the charging device can be effectively ensured when the controller in the power distribution unit is abnormal.

The foregoing is described by using an example in which the power distribution unit includes one direct current switch 10. It may be understood that the power distribution unit may include a plurality of direct current switches 10 and a plurality of drive circuits 20 connected to the plurality of direct current switches 10 in a one-to-one correspondence. Each drive circuit 20 is configured to drive turn-on or turn-off of a corresponding direct current switch 10.

In an embodiment, controllers 21 in the plurality of drive circuits 20 may be shared, that is, the controllers 21 in the plurality of drive circuits 20 are a same controller. In other words, the power distribution unit may control, through one controller 21, on/off states of drive switches connected in series to coils 11 in the plurality of direct current switches 10. In addition, components other than the controller 21 in the drive circuit 20 need to be independently disposed for each direct current switch 10. Alternatively, it may be understood that the power distribution unit includes one controller 21 and a plurality of direct current switches 10. For each of the plurality of direct current switches 10, a corresponding group of drive switches (including n drive switches connected in series) are disposed in the power distribution unit. Alternatively, in addition to the drive switch, for each direct current switch 10, a corresponding current sampling circuit 22, a corresponding voltage sampling circuit 23, and/or a corresponding latch circuit 24 are/is further disposed in the power distribution unit.

In conclusion, this embodiment of this application provides a power distribution unit. A drive circuit of a direct current switch in the power distribution unit includes a first drive switch and a second drive switch, and the two drive switches are connected in series to a coil in the direct current switch. Based on this, even if a short-circuit failure occurs on either of the first drive switch and the second drive switch, a controller in the drive circuit can still control the other drive switch to be turned off, so that the direct current switch is turned off. Therefore, a safety hazard caused by conduction of the direct current switch is effectively avoided, and reliability of the power distribution unit is improved.

In addition, the controller in the power distribution unit can further control on/off of different drive switches through different ports, thereby effectively improving flexibility and reliability of controlling the drive switches. In addition, the controller can further detect a status of the drive switch, to ensure that a drive switch with a short-circuit fault can be detected in time, and ensure integrity and reliability of a drive link of the direct current switch. Further, the controller can check, based on a current and a voltage of a switch unit, an action instruction delivered by a main controller, and execute the action instruction after the check succeeds. Therefore, it can be ensured that when communication of the main controller is abnormal or faulty, the direct current switch does not perform a misoperation, and long-term reliable operation of the power distribution unit is ensured. Further, the power distribution unit can further latch, through a latch circuit, a level status of a switch control signal output by the controller, to ensure that a status of the direct current switch can remain unchanged when the controller is abnormally reset. In addition, the power distribution unit and the power conversion module can directly perform heartbeat detection in addition to performing indirect communication through the main controller. Therefore, it can be ensured when detecting that the heartbeat of the power distribution unit is abnormal, the power conversion module is directly shut down, to enter a safe state.

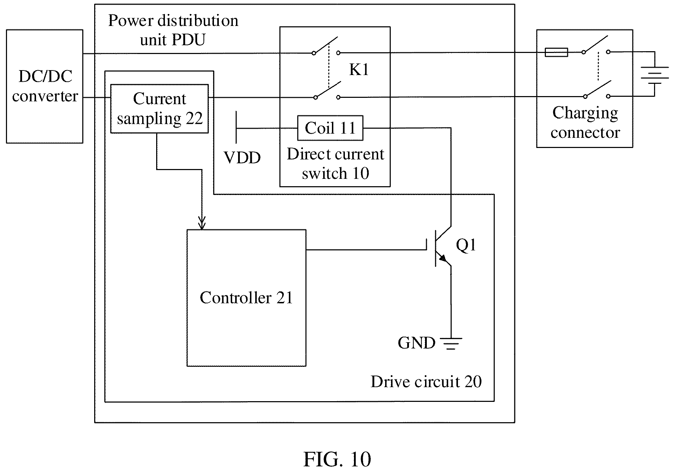

An embodiment of this application further provides another power distribution unit. The power distribution unit can be used in the application scenario shown in FIG. 1, and the power distribution unit has high reliability and can implement long-term stable operation. As shown in FIG. 10, the power distribution unit provided in this embodiment of this application includes a direct current switch 10 and a drive circuit 20 of the direct current switch 10.

The direct current switch 10 includes a switch unit K1 and a coil 11. A first end of the switch unit K1 is configured to connect to a power conversion module (for example, a DC/DC converter), and a second end of the switch unit K1 is configured to connect to a charging connector. The coil 11 is configured to: when the coil 11 is powered on, drive a circuit between the first end and the second end of the switch unit K1 to be connected, or when the coil 11 is powered off, drive the circuit between the first end and the second end of the switch unit K1 to be disconnected.

The drive circuit 20 includes a drive switch Q1 and a controller 21. The drive switch Q1 and the coil 11 are connected in series between a power supply end VDD and a grounding end GND.

The controller 21 is configured to: when a turn-on instruction delivered by a main controller is received, control the drive switch Q1 to be turned on; and when a turn-off instruction delivered by the main controller is received, and a current flowing through the switch unit K1 is less than a current threshold, control the drive switch Q1 to be turned off, so that the circuit between the first end and the second end of the direct current switch 10 is disconnected.

It may be understood that when the controller 21 receives the turn-off instruction delivered by the main controller in a charging device, and the current flowing through the switch unit K1 is not less than the current threshold, the controller 21 does not execute the turn-off instruction. In other words, the controller 21 may enable the drive switch Q1 to remain a turn-on state, so that the first end and the second end of the direct current switch 10 remain a connected state.

The current threshold may be determined based on a current breaking capability of the switch unit K1. For example, the current threshold may be less than or equal to an upper limit of a current that can be broken by the switch unit K1. It can be learned from the foregoing description that the controller 21 may check, based on a value of the current flowing through the switch unit K1, the turn-off instruction delivered by the main controller. Because the controller 21 determines, only when the turn-off instruction delivered by the main controller is received and the current flowing through the switch unit K1 is less than the current threshold, that a hardware turn-off condition of the direct current switch 10 is met, so that dependence of the power distribution unit on the turn-off instruction delivered by the main controller can be effectively reduced. In other words, the power distribution unit has a capability of determining on/off control of the direct current switch 10 by itself, and no longer completely depends on the instruction delivered by the main controller. Therefore, it can be ensured that the direct current switch 10 does not perform a misoperation when an incorrect instruction is delivered due to communication abnormality or a fault. For example, it can be effectively avoided that the direct current switch 10 is turned off with load. In this way, safety of the power distribution unit can be effectively ensured, and long-term reliable operation of the power distribution unit can be implemented.

For example, as shown in FIG. 10, the drive circuit 20 further includes a current sampling circuit 22. The current sampling circuit 22 is configured to sample the current flowing through the switch unit K1. For example, the first end of the switch unit K1 is connected to the power conversion module through the current sampling circuit 22, or the second end of the switch unit K1 is connected to the charging connector through the current sampling circuit 22. In other words, the current sampling circuit 22 and the switch unit K1 may be connected in series between the power conversion module and the charging connector.

In an embodiment, the controller 21 is configured to: when a turn-on instruction delivered by the main controller is received, and when a difference between a voltage at the first end and a voltage at the second end of the switch unit K1 is less than a voltage threshold, control the drive switch Q1 to be turned on, so that the circuit between the first end and the second end of the switch unit K1 is connected.

On the contrary, when the controller 21 receives the turn-on instruction delivered by the main controller, and the difference between the voltage at the first end and the voltage at the second end of the switch unit K1 is not less than the voltage threshold, the controller 21 does not execute the turn-on instruction. In other words, the controller 21 may enable the drive switch Q1 to remain a turn-off state, so that the first end and the second end of the switch unit K1 remain a disconnected state.

It may be understood that the difference between the voltage at the first end and the voltage at the second end of the switch unit K1 may be an absolute value of the difference. The voltage threshold may be determined based on a voltage breaking capability of the switch unit K1. For example, the voltage threshold may be less than or equal to an upper limit of a voltage that can be broken by the switch unit K1. It can be learned from the foregoing description that the controller 21 may check, based on the difference between the voltages at the two ends of the switch unit K1, the turn-on instruction delivered by the main controller. Because the controller 21 determines, only when the turn-on instruction delivered by the main controller is received and the difference between the voltages at the two ends of the switch unit K1 is less than the voltage threshold, that a hardware turn-on condition of the direct current switch 10 is met, so that dependence of the power distribution unit on the turn-on instruction delivered by the main controller can be effectively reduced. In other words, the power distribution unit has the capability of determining the on/off control of the direct current switch 10 by itself, and no longer completely depends on the instruction delivered by the main controller. Therefore, it can be ensured that the direct current switch 10 does not perform the misoperation when communication of the main controller is abnormal or the main controller is faulty. In this way, the safety of the power distribution unit can be effectively ensured, and the long-term reliable operation of the power distribution unit can be implemented.

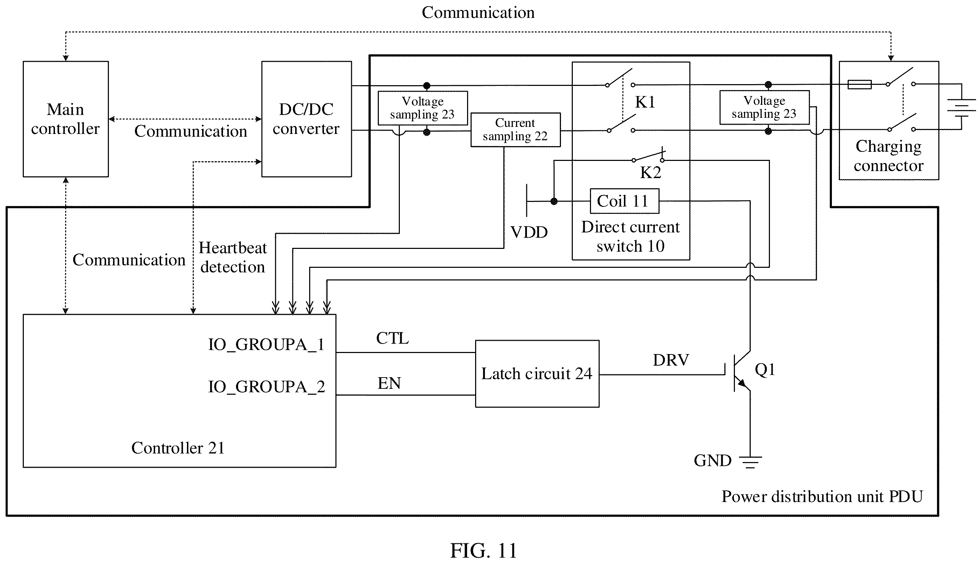

For example, as shown in FIG. 11, the drive circuit 20 may further include a voltage sampling circuit 23. The voltage sampling circuit 23 is separately connected to the first end and the second end of the switch unit K1. In addition, the voltage sampling circuit 23 is configured to sample the voltage at the first end and the voltage at the second end of the switch unit K1.

The voltage sampling circuit and the current sampling circuit are integrated into the power distribution unit, and the power distribution unit can use sampled data of the power distribution unit as a hardware determining condition for an action of the direct current switch 10, and check the action instruction delivered by the main controller through communication. Therefore, a specification requirement for the direct current switch 10 can be effectively reduced. In other words, based on the solution provided in this embodiment of this application, the direct current switch 10 in the power distribution unit may be a switch component with a low specification, for example, a relay (for example, an onboard relay) with a low specification. Because the low-specification direct current switch 10 has a small volume and low costs, a volume and costs of the power distribution unit can be effectively reduced, thereby reducing a size and costs of the entire charging device.

In an embodiment, still refer to FIG. 11. The drive circuit 20 may further include a latch circuit 24. In addition, the controller 21 is connected to the drive switch Q1 through the latch circuit 24. The latch circuit 24 is configured to latch a level of a switch control signal output by the controller 21 to the drive switch Q1. For a structure and an operating principle of the latch circuit 24, refer to the related descriptions in the foregoing embodiments. Details are not described herein again.

In an embodiment, still refer to FIG. 11. The controller 21 may further send a heartbeat signal to the power conversion module (for example, the DC/DC converter), so that the power conversion module performs heartbeat detection on the power distribution unit, and when detecting that a heartbeat is abnormal, the power conversion module can be directly shut down.

It may be understood that, in the power distribution unit provided in the embodiments shown in FIG. 10 and FIG. 11, for implementations and operating principles of the direct current switch 10, the controller 21, the drive switch Q1, the current sampling circuit 22, and the voltage sampling circuit 23, refer to the related descriptions in the foregoing embodiments. Details are not described herein again.

In conclusion, this embodiment of this application provides a power distribution unit. A controller in the power distribution unit can check, based on a current flowing through a switch unit, a turn-off instruction delivered by a main controller, and execute the turn-off instruction after the check succeeds. Therefore, it can be ensured that when communication of the main controller is abnormal or faulty, a direct current switch does not perform a misoperation, and long-term reliable operation of the power distribution unit is ensured.

In addition, the controller can further check, based on voltages at two ends of the switch unit, a turn-on instruction delivered by the main controller, and execute the turn-on instruction after the check succeeds. Therefore, it can be ensured that when communication of the main controller is abnormal or faulty, the direct current switch does not perform the misoperation, and the long-term reliable operation of the power distribution unit is ensured.

Further, the power distribution unit can further latch, through a latch circuit, a level status of a switch control signal output by the controller, to ensure that a status of the direct current switch can remain unchanged when the controller is abnormally reset. In addition, the power distribution unit and the power conversion module can directly perform heartbeat detection in addition to performing indirect communication through the main controller. Therefore, it can be ensured when detecting that a heartbeat of the power distribution unit is abnormal, the power conversion module is directly shut down, to enter a safe state.

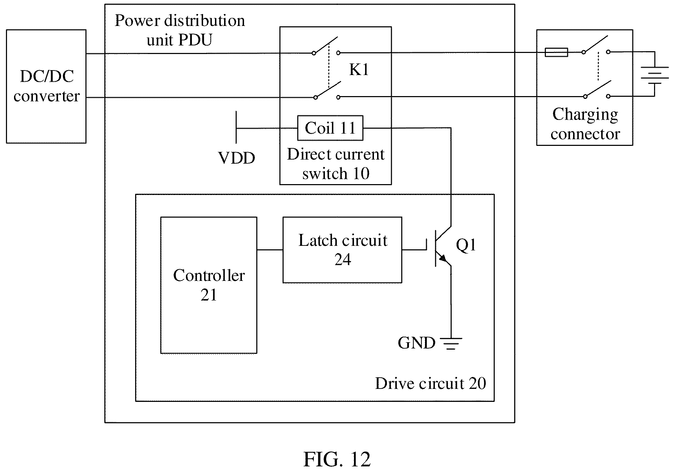

An embodiment of this application further provides still another power distribution unit. The power distribution unit can be used in the application scenario shown in FIG. 1, and the power distribution unit has high reliability and can implement long-term stable operation. As shown in FIG. 12, the power distribution unit provided in this embodiment of this application includes a direct current switch 10 and a drive circuit 20 of the direct current switch 10.

The direct current switch 10 includes a switch unit K1 and a coil 11. A first end of the switch unit K1 is configured to connect to a power conversion module (for example, a DC/DC converter), and a second end of the switch unit K1 is configured to connect to a charging connector. The coil 11 is configured to: when the coil 11 is powered on, drive a circuit between the first end and the second end of the switch unit K1 to be connected, or when the coil 11 is powered off, drive the circuit between the first end and the second end of the switch unit K1 to be disconnected.

The drive circuit 20 includes a drive switch Q1, a controller 21, and a latch circuit 24. The drive switch Q1 and the coil 11 are connected in series between a power supply end VDD and a grounding end GND.

The controller 21 is connected to the drive switch Q1 through the latch circuit 24. The controller 21 is configured to output a switch control signal to the drive switch Q1 through the latch circuit 24, to control on/off of the drive switch Q1. The latch circuit 24 is configured to latch a level of the switch control signal output by the controller 21 to the drive switch Q1. For a structure and an operating principle of the latch circuit 24, refer to the related descriptions in the foregoing embodiments. Details are not described herein again.

In an embodiment, the controller 21 may further send a heartbeat signal to the power conversion module (for example, the DC/DC converter), so that the power conversion module performs heartbeat detection on the power distribution unit, and when detecting that a heartbeat is abnormal, the power conversion module can be directly shut down. For a specific implementation process of the heartbeat detection, refer to the related descriptions in the foregoing embodiments. Details are not described herein again.

An embodiment of this application further provides yet another power distribution unit. The power distribution unit can be used in the application scenario shown in FIG. 1, and the power distribution unit has high reliability and can implement long-term stable operation. As shown in FIG. 6 to FIG. 8 and FIG. 11, the power distribution unit provided in this embodiment of this application includes a direct current switch 10 and a drive circuit 20 of the direct current switch 10.

The direct current switch 10 includes a switch unit K1 and a coil 11. A first end of the switch unit K1 is configured to connect to a power conversion module (for example, a DC/DC converter), and a second end of the switch unit K1 is configured to connect to a charging connector. The coil 11 is configured to: when the coil 11 is powered on, drive a circuit between the first end and the second end of the switch unit K1 to be connected, or when the coil 11 is powered off, drive the circuit between the first end and the second end of the switch unit K1 to be disconnected.

The drive circuit 20 includes a drive switch Q1 and a controller 21. The drive switch Q1 and the coil 11 are connected in series between a power supply end VDD and a grounding end GND. The controller 21 is connected to the drive switch Q1, and is configured to output a switch control signal to the drive switch Q1, to control on/off of the drive switch Q1. The controller 21 is further configured to send a heartbeat signal to the power conversion module (for example, the DC/DC converter), so that the power conversion module performs heartbeat detection on the power distribution unit, and when detecting that a heartbeat is abnormal, the power conversion module can be directly shut down. For a specific implementation process of the heartbeat detection, refer to the related descriptions in the foregoing embodiments. Details are not described herein again.

An embodiment of this application further provides a charging device. Refer to FIG. 1. The charging device includes a power conversion module, one or more charging connectors, and the power distribution unit provided in the foregoing embodiments. The power conversion module is configured to output a direct current to the power distribution unit, and the power distribution unit is configured to output the direct current to at least one of the one or more charging connectors.

In an embodiment, the power conversion module is further configured to: receive a heartbeat signal sent by a controller in the power distribution unit, and stop outputting the direct current to the power distribution unit when detecting that the heartbeat signal is abnormal. In other words, when detecting that the heartbeat of the power distribution unit is abnormal, the power conversion module can be directly shut down, to ensure safety of a charging cabinet. That the heartbeat signal is abnormal may mean that the heartbeat signal sent by the power distribution unit is not received within specified duration.

In an embodiment, as shown in FIG. 6 to FIG. 8 and FIG. 11, the charging device further includes a main controller. The main controller is configured to send a turn-on instruction or a turn-off instruction to the controller in the power distribution unit. The turn-on instruction instructs a direct current switch in the power distribution unit to be turned on, and the turn-off instruction instructs the direct current switch to be turned off.

As described above, the main controller separately establishes communication connections to a DC/DC converter in the power conversion module, the power distribution unit, and the charging connector. The main controller can query for, based on the foregoing communication connections, a status of the DC/DC converter, a status of the direct current switch in the power distribution unit, and a status of the charging connector, generate a corresponding action instruction (namely, the turn-on instruction or the turn-off instruction) based on the queried statuses, and deliver the corresponding action instruction to the controller in the power distribution unit.

In embodiments of this application, terms "first", "second", and "third" are merely used for description, but shall not be understood as an indication or implication of relative importance. A term "at least one" means one or more, and "a plurality of" means two or more.

A term "and/or" in embodiments of this application describes only an association relationship between associated objects and indicates that three relationships may exist. For example, A and/or B may indicate the following three cases: Only A exists, both A and B exist, and only B exists. In addition, a character "/" in this specification usually indicates an "or" relationship between the associated objects.

The foregoing descriptions are merely optional implementations of this application, but the protection scope of this application is not limited thereto. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A power distribution unit, wherein the power distribution unit comprises a direct current switch and a drive circuit;
the direct current switch comprises a switch unit and a coil, wherein a first end of the switch unit is configured to connect to a power conversion module; a second end of the switch unit is configured to connect to a charging connector; and the coil is configured to: when the coil is powered on, drive a circuit between the first end and the second end of the switch unit to be connected; or when the coil is powered off, drive the circuit between the first end and the second end of the switch unit to be disconnected; and
the drive circuit comprises a first drive switch, a second drive switch, and a controller, wherein the first drive switch, the second drive switch, and the coil are connected in series between a power supply end and a grounding end, and the controller is configured to: control on/off of the first drive switch and control on/off of the second drive switch.

2. The power distribution unit according to claim 1, wherein the controller has a first port and a second port; and
the controller is configured to output a first switch control signal to the first drive switch through the first port, to control on/off of the first drive switch, and is configured to output a second switch control signal to the second drive switch through the second port, to control on/off of the second drive switch.

3. The power distribution unit according to claim 1 or 2, wherein the controller is further configured to:
when one of the first drive switch and the second drive switch is turned on, the other switch is turned off, and the circuit between the first end and the second end of the switch unit is connected, control the switch to be turned off.

4. The power distribution unit according to any one of claims 1 to 3, wherein the controller is configured to: when a turn-off instruction delivered by a main controller in a charging device is received, and a current flowing through the switch unit is less than a current threshold, control both the first drive switch and the second drive switch to be turned off.

5. The power distribution unit according to any one of claims 1 to 4, wherein the controller is configured to: when a turn-on instruction delivered by the main controller in the charging device is received, and when a difference between a voltage at the first end of the switch unit and a voltage at the second end of the switch unit is less than a voltage threshold, control both the first drive switch and the second drive switch to be turned on.

6. The power distribution unit according to any one of claims 1 to 5, wherein the drive circuit further comprises a latch circuit; and
the controller is connected to the first drive switch and the second drive switch through the latch circuit, and the latch circuit is configured to latch levels of the switch control signals output by the controller to the first drive switch and the second drive switch.

7. The power distribution unit according to any one of claims 1 to 6, wherein the controller is further configured to send a heartbeat signal to the power conversion module.

8. A power distribution unit, wherein the power distribution unit comprises a direct current switch and a drive circuit;
the direct current switch comprises a switch unit and a coil, wherein a first end of the switch unit is configured to connect to a power conversion module; a second end of the switch unit is configured to connect to a charging connector; and the coil is configured to: when the coil is powered on, drive a circuit between the first end and the second end of the switch unit to be connected; or when the coil is powered off, drive the circuit between the first end and the second end of the switch unit to be disconnected;
the drive circuit comprises a drive switch and a controller, wherein the drive switch and the coil are connected in series between a power supply end and a grounding end; and
the controller is configured to: when a turn-on instruction delivered by a main controller in a charging device is received, control the drive switch to be turned on; and when a turn-off instruction delivered by the main controller is received, and a current flowing through the switch unit is less than a current threshold, control the drive switch to be turned off.

9. The power distribution unit according to claim 8, wherein the controller is configured to: when the turn-on instruction delivered by the main controller is received, and when a difference between a voltage at the first end of the switch unit and a voltage at the second end of the switch unit is less than a voltage threshold, control the drive switch to be turned on.

10. A charging device, wherein the charging device comprises a power conversion module, one or more charging connectors, and the power distribution unit according to any one of claims 1 to 9, wherein
the power conversion module is configured to output a direct current to the power distribution unit, and the power distribution unit is configured to output the direct current to at least one of the one or more charging connectors.

11. The charging device according to claim 10, wherein the power conversion module is further configured to: receive a heartbeat signal sent by a controller in the power distribution unit, and stop outputting the direct current to the power distribution unit when detecting that the heartbeat signal is abnormal.

12. The charging device according to claim 10 or 11, wherein the charging device further comprises a main controller, and the main controller is configured to send a turn-on instruction or a turn-off instruction to the controller in the power distribution unit, wherein
the turn-on instruction instructs a direct current switch in the power distribution unit to be turned on, and the turn-off instruction instructs the direct current switch to be turned off.
